# EUROPEAN PATENT SPECIFICATION

(11) **EP 3 850 046 B1**
(45) Date of publication and mention of the grant of the patent: **03.08.2022**
(21) Application number: 19736770.9
(22) Date of filing: 19.06.2019
(51) Int. Cl.: C09D 5/00

(54) **A METHOD FOR SEALING PAPERBOARD**
VERFAHREN ZUM VERSIEGELN VON PAPPE
PROCÉDÉ D'ÉTANCHÉIFICATION DE CARTON

(30) Priority: 11.09.2018 FI 20185757
(43) Date of publication of application: 21.07.2021
(73) Proprietor: CH-Polymers Oy, 02170 Espoo (FI)
(72) Inventor: MIETTINEN, Päivi, 02170 Espoo (FI); AHOKAS, Mia, 02170 Espoo (FI); HEINONEN, Jaana, 02170 Espoo (FI)
(74) Representative: Hovinen, Jari Juhani
(86) International application number: PCT/FI2019/050481
(87) International publication number: WO 2020/053474

(56) References cited:
- EP-A1- 1 249 533
- WO-A1-2016/170229
- US-A1- 2008 132 606
- US-A1- 2009 029 902

## Description

### FIELD

The present invention relates to methods for sealing paperboard, in particular to methods wherein the sealing is performed by using water-based barrier coatings.

### BACKGROUND

Sustainable barrier solutions are gaining more attractiveness from the packaging industry due to the environmental aspects to replace the traditional barrier materials such as polyethylene (PE), waxes and fluorocarbons. PE is the most widely used plastic in packaging applications. The major issue for PE is concerns on its environmental credentials. According to EN 13432 each layer separately must fill the requirements of organic composting. Since PE-laminated material is a multi-layer structure, PE-laminated materials do not fulfill the requirements for biodegradability and composting. The recycling fees for multi-layer materials are also higher than fees for mono materials such as dispersion coated packages.

One possible solution is the use of Water Based Barrier Coatings (WBBC) which are partly based on biomaterials. However, the use of WBBCs have its challenges. For example, when compared to heat sealibility of PE plastic, water-based barrier dispersions are more sensitive towards high sealing temperatures and high sealing pressures.

WO 2011/146087 discloses hermetically sealed paperboard containers with improved barrier performance. The multilayer paperboard comprises a sealant layer and a specialized low melting-point PVA polymer positioned over a layer of barrier material, which may be water-based. According to the document, temperatures of hot air needed for preheating and heating the sealant layer prior to sealing was significantly lower than temperatures needed for standard processes. However, the lowering of sealing temperature requires the manufacture of multilayer paperboard.

WO 2016/170229 discloses method and system for manufacturing a coated paperboard and a coated paperboard comprising a precoating layer, a barrier coating layer arranged on top of the precoating layer, and a heat sealable coating layer arranged on top of the barrier coating layer. The heat sealable coating layer and the barrier layer may comprise an aqueous dispersion such as PVA latex or styrene butadiene latex as a main dispersed component. The document does not teach or suggest a process for sealing a paperboard comprising a water-based barrier layer.

Accordingly, there is still need for methods for paperboard sealing with water-based barrier materials.

### SUMMARY

The following presents a simplified summary to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In the present invention it was observed that when a paperboard comprising a water-based barrier coating (WBBC) was heat sealed so that the paperboard was subjected to the heat on a side which was not coated with the WBBC, proper sealing could be achieved by using significantly lower temperatures.

In accordance with the invention, there is provided a new method for sealing paperboard, the method comprising:
a) providing a first paperboard comprising a first surface and a second surface, wherein the second surface is coated with a barrier composition comprising
   ▪ 0-60% by weight platy particles,
   ▪ 0-60% by weight precipitated calcium carbonate, and
   ▪ 40-100% by weight a binder comprising 20-95% by weight one or more synthetic polymers and 5-80% by weight one or more biopolymers,
b) subjecting a first part of the first surface of the first paperboard to temperature of 120-450 °C, preferably of 350-400 °C, and
c) pressing a part of the second surface of the first paperboard opposing the first part of the first surface of the first paperboard against a paperboard surface, wherein the paperboard surface is not coated with the barrier composition.

In accordance with the invention, there is also provided a paperboard product comprising a seal obtainable by a method according to any of claims 1-15.

In accordance with the invention, there is also provided a paperboard product obtainable by a method according to any of claims 1-15.

A number of exemplifying and non-limiting embodiments of the invention are described in accompanied dependent claims.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF FIGURES

Figure 1 shows an exemplary method for sealing paperboard according to prior art,
Figures 2-4 show exemplary methods for sealing paperboards according to exemplary non-limiting embodiments of the preset invention, and
Figure 5 shows a top view of exemplary sealed paperboard product manufactured according to the method of the present invention.

### DESCRIPTION

The specific examples provided in the description below should not be construed as limiting the scope and/or the applicability of the accompanied claims. Lists and groups of examples provided in the description are not exhaustive unless otherwise explicitly stated.

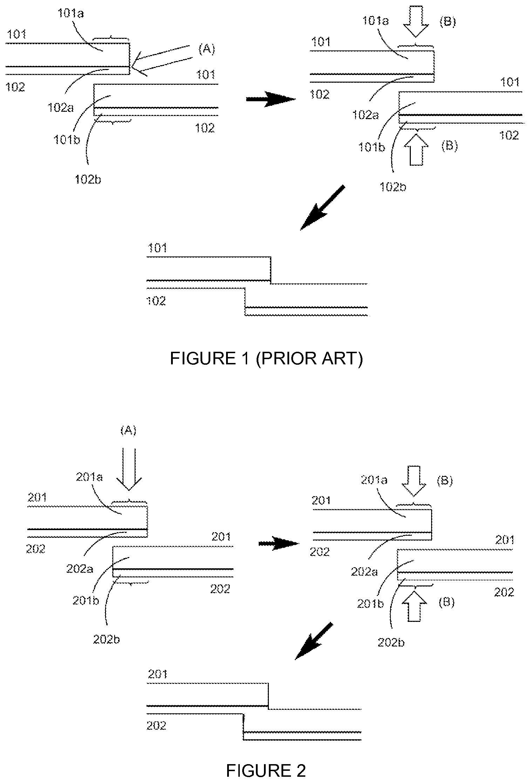

The principle of heat sealing of paperboards using hot air according to prior art is shown in Figure 1. The paperboard has a first surface 101, and a second surface 102 which is coated with a sealing agent such as polymer like PE. For sealing, the polymer is melted by applying hot air (A) to the PE on the first part 102a of the second surface. Finally, the melted polymer layer is pressed (B) against the second part 101b of the first surface by using an external force. A seal is formed upon cooling.

When the sealing is done by using PE, a proper sealing can be achieved by using sealing temperatures like 350 °C. However, when barrier compositions based on WBBCs comprising biopolymers such as those disclosed in WO2016/174309 are used instead of PE, significantly higher sealing temperatures must be used. The heat, in turn, at least partially destroys the barrier material, and a low-quality sealing is achieved.

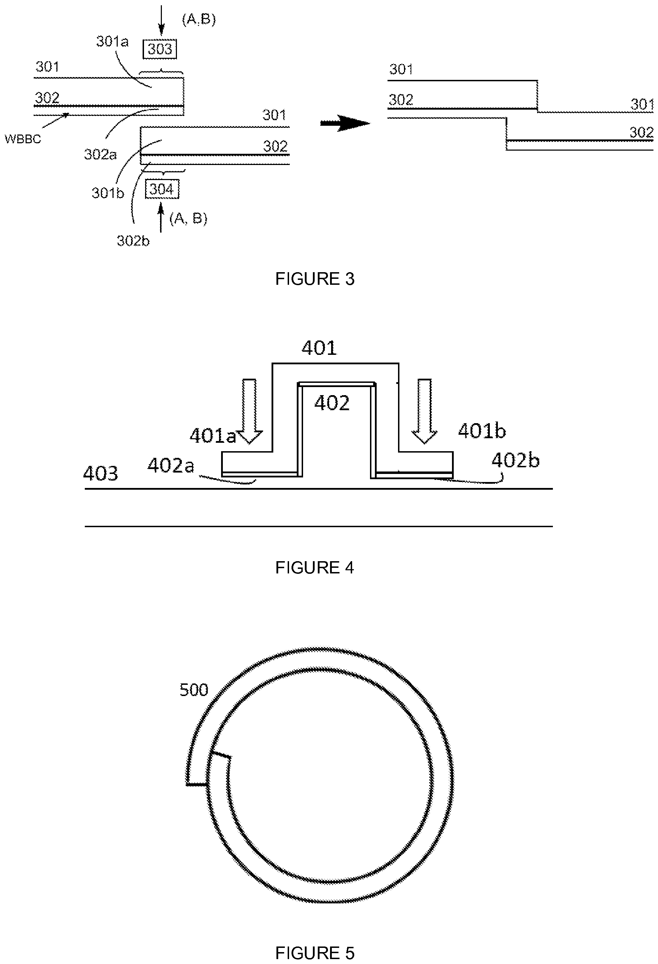

Exemplary methods for sealing a paperboard according to the present invention is shown in figures 2-4. In the figures, only representative portions of the paperboard are shown for clarity. A top view of an exemplary paperboard product wherein the seal is prepared according to the method of the present invention is shown in figure 5.

Figure 2 shows an exemplary method according to present invention for sealing two ends of a paperboard together. The method includes the following steps:
o providing a paperboard comprising a first surface 201 and a WBBC applied and dried on a second surface 202 to form a barrier composition comprising
   ▪ 0-60% by weight platy particles;
   ▪ 0-60% by weight precipitated calcium carbonate preferably having an average diameter 30-60 nm and
   ▪ 40-100% by weight a binder comprising 20-95% by weight one or more synthetic polymers and 5-80% by weight one or more biopolymers;
o subjecting a first end 201a of the first surface to temperature of 250-450 °C, preferably of 300-400 °C by using hot air, and
o pressing the barrier composition on the first end 202a of the second surface against the second end 201b of the first surface by subjecting an external force to the first end of 201a the first surface and/or to the second end of the second surface 202b.

In figure 2, the subjecting with hot air is marked with an arrow (A), and the pressing is marked with the two arrows (B), respectively.

According to the present disclosure, the first end of the first surface of the paperboard, the second end of the first surface of the paperboard, the first end of the second surface of the paperboard, and the second end of the second surface of the paperboard are to be understood as parts of the paperboard which are used for the sealing, *i.e.* parts of the paperboard which are subjected to heating, parts of the paperboard comprising the barrier composition to be used for sealing, and parts of the paperboard used for pressing. It is obvious for a skilled person that the areas and shapes of the parts used for sealing depend on the application, and that they can be modified if needed.

Figure 3 shows another exemplary embodiment of the present invention wherein the heating is performed by using a hot plate 303. According to this embodiment, the first end 301a of the first surface is subjected to temperature of 120-450 °C, preferably 300-400 °C, more preferably 350-400 °C. A particular temperature is 350 °C. The heat is subjected preferably for 0.5-1 s followed by pressing the ends to the paperboard towards each other by an external force. A typical pressing time is 1 s. According to a particular embodiment the pressing is performed by using two plates 303, 304, wherein the plate 303 is heated and the plate 304 is not heated. When a hot plate heating was used instead of hot air, a sufficient sealing could be obtained even at 125 °C. In figure 3, the heating and pressing is marked with arrows (A,B).

The subjecting to heat can be performed by using hot air or hot plates as shown in figures 2 and 3, respectively. Also, other heating methods such as infrared heating or ultrasound heating can be used.

According to a further embodiment the heating is performed by using two or more hot plates, such as two hot plates 303 and 304 shown in figure 3. The heat of the plate 304 preferably reduced. An exemplary temperature of the plate 304 is 45 °C.

According to a particular embodiment the method comprises moistening the barrier composition on the first end of the second surface prior or during subjecting to heat. The moistening can be done e.g. by spraying water to the barrier composition.

The methods shown in figures 2 and 3 are suitable e.g. for sealing side walls of a paperboard cup.

Figure 4 shows a further embodiment of the method of the present invention wherein two pieces of paperboard are sealed together. According to this embodiment at least one of the two paperboards, i.e. the first paperboard, includes a first surface 401 which is not covered by the barrier composition, and a second surface 402 which is covered by the barrier composition. According to this embodiment, the first part 401a of a first surface of the first paperboard is heated using the method of the present disclosure followed by pressing part of the second side 401b of this paperboard opposing the heated part 401a against a surface 403 of a second paperboard. The surface 403 does not include the barrier composition. The seal is formed upon cooling. Further parts of the two paperboards, such as 402b and 403 can be sealed accordingly. This method is suitable e.g. for preparing handles for paperboard cups. The pressing and heating of the parts of the first surface 401a,b of the first paperboard are represented in figure with two arrows.

Naturally, the method of the present invention is applicable for sealing plurality of paperboards together.

A variety of paperboards may be used in the present disclosure. These include, but are not limited to, coated natural kraft board (CNK board), solid bleached sulphate board (SBS), solid unbleached sulphate board (SUS), coated recycled board (CRB), coated white lined chipboard (WLC), folding boxboard (FBB), and other paperboard grades suitable for cup formation. A particular paper board has a rough surface, which is difficult to seal with WBBCs by using the methods of prior art.

According to a particular embodiment the first surface and or the second surface of the paperboard comprises a coating layer comprising inorganic filler particles preferably selected from calcium carbonate, kaolin and titanium dioxide. According to this embodiment the barrier composition is applied on the coating layer of the paperboard.

The water-based barrier coating layer can be produced as disclosed e.g. in WO2016/174309. The WBBC can be applied on the paperboard and dried using techniques known in the art. The dried WBBC comprises 40-100% by weight binder, 0-60% by weight platy particles and 0-60% by weight precipitated calcium carbonate (PCC). Diameter of the PCC is preferably 30-60 nm. The binder comprises 20-95% by weight synthetic polymers and 5-80% by weight biopolymers. According to an exemplary embodiment the binder comprises 10% by weight biopolymers.

According to one embodiment the synthetic polymer is selected from synthetic latexes and polyvinyl alcohol. Exemplary synthetic latexes are styrene butadiene latex, styrene acrylate latex, vinyl acetate acrylate latex, ethylene vinyl acetate latex, and vinyl acetate latex. The biopolymers are preferably selected from starches, proteins, carboxy methyl cellulose and other cellulose derivatives. A particular biopolymer is starch. A particular synthetic polymer is styrene acrylate latex.

According to a particular embodiment the synthetic polymer is styrene acrylate latex and the biopolymer is starch. According to this embodiment, the barrier composition comprises 90% by weight styrene acrylate and 10% by weight starch.

According to one embodiment the platy particles are platy pigments. According to another embodiment the platy particles are selected from talc, kaolin, bentonite and combinations thereof. According to an exemplary embodiment the barrier composition comprises 10-40% by weight platy particles, preferably talc, 0-20% by weight precipitated calcium carbonate, and 40-90% by weight binder. The binder comprises 5-80%, preferably 10-40% by weight one or more biopolymers, in particular starch. According one embodiment the composition does not comprise PCC.

According to a particular embodiment the barrier composition comprises 50-65% by weight styrene acrylate latex, 10% by weight biopolymer, 0-5% by weight PCC, and 20-40% platy particles, such as platy pigments.

According to one embodiment the method comprises subjecting a first end 201a of the first surface to temperature of 120-450 °C, preferably 250-450 °C, more preferably of 300-400 °C, even more preferably of 350-400 °C. A particular temperature is 350 °C. The heat is subjected preferably for 0.5-1 s followed by pressing the ends to the paperboard towards each other by an external force. A typical pressing time is 1 s. An exemplary pressure used for pressing is 4 bar.

According to one embodiment the present invention concerns a paperboard product comprising a seal obtainable by a method of the present invention. An exemplary paperboard product is a cup. The cup comprising the seal according to the present invention can be manufactured by using cup forming machines. A top view of a cup 400 wherein the paperboard is prepared according to the present method is show in figure 4. The shape of the seal is exaggerated for clarity.

A typical cup forming machine consists of a blank feeding system, heating elements, carousal forming station, bottom stock web feeding and die cutting, rim curl station, transport system, and a packaging/inspection station. The heating elements provide a controlled heating process to activate the water-based barrier as described above. The heating elements are applied for a side seam of the container body component, as well as for the sealing between the container body component and bottom component of the cup. The heating unit of the machine is modified such that the can be directed to the side of the paperboard opposite to the water-based barrier. The typical heating method is by blowing hot air through multiple nozzles to the selected areas of the structure. Nonetheless, other heating methods may be used to activate the sealant such as infrared heating, ultrasonic heating and hot bar heating.

### Experiments

The water-based barrier compositions were prepared as disclosed in WO 2016/174309, applied on a paperboard and dried. Also, WBBCs not including PCC were prepared. Hot air and hot bar heat sealability of barrier dispersion coated boards were tested with a CAF heat sealing machine. In hot air sealing test, the coated side or the non-coated side of the material was heated under air flow of 200 L/min at a given temperature for 0.5 - 3 seconds. Heated side of the sample was then pressed against an unheated side of the material for one second at pressure of 4 bars. In hot bar sealing tests, the temperature of a lower sealing bar was 45 °C and the temperature of the upper sealing bar was adjusted. Samples were placed between the bars coating against coating and bars were clamped for 1 second with a pressure of 4 bars. After cooling formed seals were torn open by hands and sealability was evaluated visually using following scale: 0 = no seal, 1 = weak adhesion, 2 = adhered but no fibre tear, 3 = under 50 % fibre tear, 4 = over 50 % fibre tear and 5 = 100% fibre tear.

In few experiments the WBBC was moistened by subjecting the coating layer with spray of water during and/or before heating.

The results are shown in Table 1.

| **Dispersion** | **Temp /°C** | **heating time/s** | **pressure time/s** | **moisture** | **sealing when heating the coated side** | **sealing when heating the uncoated side** |
|---|---|---|---|---|---|---|
| 1^{a} | 525^{e} | 0.5 | 1 | no | 3 | |
| 1 | 350 ^{e} | 0.5 | 1 | no | | 5 |
| 1 | 500^{e} | 1 | 1 | no | 1 | |
| 1 | 450 ^{e} | 3 | 1 | no | 1 | |
| 2^{b} | 525 ^{e} | 0.5 | 1 | no | 3 | |
| 2 | 350 ^{e} | 0,5 | 1 | no | | 5 |
| 2 | 500 ^{e} | 1 | 1 | no | 1 | |
| 3^{c} | 525 ^{e} | 0.5 | 1 | no | 3 | |
| 3 | 350 ^{e} | 0.5 | 1 | no | | 5 |
| 3 | 500 ^{e} | 1 | 1 | no | 3 | |
| 3 | 450 ^{e} | 0.5 | 1 | yes | 3 | |
| 3 | 450 ^{e} | 2 | 1 | no | 4 | |
| 3 | 300^{e} | 0.5 | 1 | no | 0 | 3 |
| 3 | 400 ^{e} | 0.5 | 1 | no | | 5 |
| 3 | 300 ^{e} | 0.5 | 1 | yes | | 5 |
| 3 | 125^{f} | 0.5 | 1 | no | | 5 |
| PE^{d} | 350 ^{e} | 0.5 | 1 | no | 5 | |
| PE | 350 ^{e} | 0.5 | 1 | no | | 1 |

| | | | | | | |
|---|---|---|---|---|---|---|
| a-c: paperboard coated with composition comprising 50-65% by weight styrene acrylate latex; 10% by weight biopolymer, 20-40% platy pigments, and 0-5% by weight PCC; d: paperboard coated with polyethylene; e: heating using hot air; f: heating using hot plate. | | | | | | |

The results can be summarized as follows.
✔ Paperboard can be sealed with WBBCs as effectively as with PE when the heat is not subjected directly to the WBBCs.
✔ The heating temperature can be reduced by moistening the WBBC and by using hot plate instead of hot air
✔ The method of the present invention is not suitable for sealing paperboards coated with PE.

## Claims

1. A method for sealing paperboard, the method comprising:
a) providing a first paperboard comprising a first surface (201, 301, 401) and a second surface (202, 302, 402) wherein the second surface is coated with a barrier composition comprising
▪ 0-60% by weight platy particles,
▪ 0-60% by weight precipitated calcium carbonate, and
▪ 40-100% by weight a binder comprising 20-95% by weight one or more synthetic polymers and 5-80% by weight one or more biopolymers,
b) subjecting a first part (201a, 301a, 401a, 401b) of the first surface of the first paperboard to temperature of 120-450 °C, preferably 250-450 °C, more preferably of 350-400 °C, and
c) pressing part (202b, 302b, 402a, 402b) of the second surface (202, 302, 402) of the first paperboard opposing the first part (201a, 301a, 401a, 401b) of the first surface against a paperboard surface wherein the paperboard surface (201, 301, 403) is not coated with the binder composition.

2. The method according to claim 1, wherein the paperboard surface is a second part (201b, 301b) of the first surface of the first paperboard.

3. The method according to claim 1, wherein the paperboard surface is a first part of a first surface of a second paperboard (403).

4. The method according to any of claims 1-3 comprising moistening the barrier composition prior to the pressing.

5. The method according to any of claims 1 -4, wherein the platy particles are selected from talc, kaolin, bentonite and combinations thereof.

6. The method according to any of claims 1-5, wherein the one or more synthetic polymers are selected from polymer latexes and polyvinyl alcohol.

7. The method according to claim 6 wherein the polymer latexes are selected from styrene butadiene latex, styrene acrylate latex, vinyl acetate acrylate latex, ethylene vinyl acetate latex, and vinyl acetate latex, preferably styrene acrylate latex.

8. The method according to any of claims 1-7 wherein the one or more biopolymers are selected from starch, proteins, and carboxy methyl cellulose, preferably starch.

9. The method according to any of claims 1-8, wherein the subjecting comprises applying flow of air on the first part of the first surface of the first paperboard, wherein temperature of the air is 250-450 °C, preferably 350-400 °C.

10. The method according any of claims 1-8, wherein the subjecting comprises contacting the first part of the first surface of the first paperboard with bar of metal.

11. The method according to any of claims 1-10, wherein the subjecting is for 0.25 - 1 s, preferably for 0.5 s.

12. The method according to any of claims 1-11, wherein the pressing is for 0.25 - 1 s, preferably for 0.5 s.

13. The method according to any of claims 1 - 12, wherein the first surface and/or the second surface of the first paperboard comprises a coating layer comprising inorganic filler particles preferably selected from calcium carbonate, kaolin and titanium dioxide

14. The method according to claim 13, wherein coating layer of the first surface of the first paperboard further comprises a binder selected from polymer latex, polyvinyl alcohol, protein and starch.

15. The method according to any of claims 1-14, wherein the PCC has an average diameter 30-60 nm.

16. A sealed paperboard product comprising a seal obtainable by a method according to any of claims 1-15.

17. A paperboard product obtainable by a method according to any of claims 1-15.

## Patentansprüche

1. Verfahren zum Versiegeln von Pappe, wobei das Verfahren Folgendes umfasst:
a) Bereitstellen einer ersten Pappe umfassend eine erste Oberfläche (201, 301, 401) und eine zweite Oberfläche (202, 302, 402), wobei die zweite Oberfläche mit einer Barrierezusammensetzung beschichtet ist, umfassend
▪ 0-60 Gew.-% flache Partikel,
▪ 0-60 Gew.-% ausgefälltes Calciumcarbonat, und
▪ 40-100 Gew.-% eines Bindemittels umfassend 20-95 Gew.-% eines oder mehrerer synthetischer Polymere und 5-80 Gew.-% eines oder mehrerer Biopolymere,
b) Unterwerfen eines ersten Teils (201a, 301a, 401a, 401b) der ersten Oberfläche der ersten Pappe einer Temperatur von 120-450 °C, bevorzugt 250-450 °C, noch bevorzugter von 350-400 °C, und
c) Drücken eines Teils (202b, 302b, 402a, 402b) der zweiten Oberfläche (202, 302, 402) der ersten Pappe, die dem ersten Teil (201a, 301a, 401a, 401b) der ersten Oberfläche gegenüberliegt, gegen eine Pappeoberfläche, wobei die Pappeoberfläche (201, 301, 403) nicht mit der Bindemittelzusammensetzung beschichtet ist.

2. Verfahren nach Anspruch 1, wobei die Pappeoberfläche ein zweiter Teil (201b, 301b) der ersten Oberfläche der ersten Pappe ist.

3. Verfahren nach Anspruch 1, wobei die Pappeoberfläche ein erster Teil einer ersten Oberfläche einer zweiten Pappe (403) ist.

4. Verfahren nach einem der Ansprüche 1-3, umfassend das Befeuchten der Barrierezusammensetzung vor dem Drücken.

5. Verfahren nach einem der Ansprüche 1-4, bei die flachen Partikel unter Talkum, Kaolin, Bentonit und Kombinationen davon ausgewählt werden.

6. Verfahren nach einem der Ansprüche 1-5, wobei das eine oder die mehreren synthetischen Polymere unter Polymerlatizes und Polyvinylalkohol ausgewählt werden.

7. Verfahren nach Anspruch 6, wobei die Polymerlatizes unter Styrolbutadienlatex, Styrolacrylatlatex, Vinylacetatacrylatlatex, Ethylenvinylacetatlatex und Vinylacetatlatex, bevorzugt Styrolacrylatlatex, ausgewählt werden.

8. Verfahren nach einem der Ansprüche 1-7, wobei das eine oder die mehreren Biopolymere unter Stärke, Proteinen und Carboxymethylcellulose, bevorzugt Stärke, gewählt werden.

9. Verfahren nach einem der Ansprüche 1-8, wobei das Unterwerfen das Aufbringen einer Luftströmung auf den ersten Teil der ersten Oberfläche der ersten Pappe umfasst, wobei die Temperatur der Luft 250-450 °C, bevorzugt 350-400 °C, beträgt.

10. Verfahren nach einem der Ansprüche 1-8, wobei das Unterwerfen das Kontaktieren des ersten Teils der ersten Oberfläche der ersten Pappe mit einer Metallstange umfasst.

11. Verfahren nach einem der Ansprüche 1-10, wobei das Unterwerfen 0,25 - 1 Sek., bevorzugt 0,5 Sek. lang stattfindet.

12. Verfahren nach einem der Ansprüche 1-11, wobei das Drücken 0,25 - 1 Sek., bevorzugt 0,5 Sek. lang stattfindet.

13. Verfahren nach einem der Ansprüche 1 - 12, wobei die erste Oberfläche und/oder die zweite Oberfläche der ersten Pappe eine Beschichtungsschicht umfassen, die Partikel von anorganischem Füllstoff umfasst, die bevorzugt unter Calciumcarbonat, Kaolin und Titandioxid ausgewählt sind.

14. Verfahren nach Anspruch 13, wobei die Beschichtungsschicht der ersten Oberfläche der ersten Pappe ferner ein Bindemittel umfasst ausgewählt unter Polymerlatex, Polyvinylalkohol, Protein und Stärke.

15. Verfahren nach einem der Ansprüche 1-14, wobei das PCC einen durchschnittlichen Durchmesser von 30-60 nm aufweist.

16. Versiegeltes Pappeprodukt umfassend eine Versiegelung erhältlich durch ein Verfahren nach einem der Ansprüche 1-15.

17. Pappeprodukt erhältlich durch ein Verfahren nach einem der Ansprüche 1-15.

## Revendications

1. Procédé d'étanchéification de carton, le procédé consistant à :
a) fournir un premier carton comprenant une première surface (201, 301, 401) et une deuxième surface (202, 302, 402) dans lequel la deuxième surface est revêtue d'une composition barrière comprenant
▪ de 0 à 60 % en poids de particules lamellaires,
▪ de 0 à 60 % en poids de carbonate de calcium précipité, et
▪ de 40 à 100 % en poids d'un liant comprenant de 20 à 95 % en poids d'un ou de plusieurs polymères synthétiques et de 5 à 80 % en poids d'un ou de plusieurs biopolymères,
b) soumettre une première partie (201a, 301a, 401a, 401b) de la première surface du premier carton à une température comprise dans la plage allant de 120 à 450 °C, de préférence dans la plage allant de 250 à 450 °C, plus préférablement dans la plage allant de 350 à 400 °C, et
c) presser une partie (202b, 302b, 402a, 402b) de la deuxième surface (202, 302, 402) du premier carton opposé à la première partie (201a, 301a, 401a, 401b) de la première surface contre une surface de carton, dans lequel la surface de carton (201, 301, 401) n'est pas revêtue de la composition de liant.

2. Procédé selon la revendication 1, dans lequel la surface de carton est une deuxième partie (201b, 301b) de la première surface du premier carton.

3. Procédé selon la revendication 1, dans lequel la surface de carton est une première partie d'une première surface d'un deuxième carton (403).

4. Procédé selon l'une quelconque des revendications 1 à 3 comprenant l'humidification de la composition barrière avant le pressage.

5. Procédé selon l'une quelconque des revendications 1 à 4, dans lequel les particules lamellaires sont choisies parmi le talc, le kaolin, la bentonite et les combinaisons de ceux-ci.

6. Procédé selon l'une quelconque des revendications 1 à 5, dans lequel l'un ou plusieurs polymères synthétiques sont choisis parmi les latex de polymère et un alcool polyvinylique.

7. Procédé selon la revendication 6, dans lequel les latex de polymère sont choisis parmi le latex de styrène et de butadiène, le latex d'acrylate de styrène, le latex d'acrylate et d'acétate de vinyle, le latex d'éthylène et d'acétate de vinyle, et le latex d'acétate de vinyle, de préférence le latex d'acrylate de styrène.

8. Procédé selon l'une quelconque des revendications 1 à 7, dans lequel l'un ou plusieurs biopolymères sont choisis parmi l'amidon, les protéines, et la carboxy méthyl cellulose, de préférence l'amidon.

9. Procédé selon l'une quelconque des revendications 1 à 8, dans lequel l'étape de soumission comprend l'application d'un débit d'air sur la première partie de la première surface du premier carton, dans lequel la température de l'air est comprise dans une plage allant de 250 à 450 °C, de préférence dans une plage allant de 350 à 400 °C.

10. Procédé selon l'une quelconque des revendications 1 à 8, dans lequel l'étape de soumission comprend la mise en contact de la première partie de la première surface du premier carton avec une barre de métal.

11. Procédé selon l'une quelconque des revendications 1 à 10, dans lequel l'étape de soumission dure entre 0,25 et 1 s, de préférence dure 0,5 s.

12. Procédé selon l'une quelconque des revendications 1 à 11, dans lequel le pressage dure entre 0,25 et 1 s, de préférence dure 0,5 s.

13. Procédé selon l'une quelconque des revendications 1 à 12, dans lequel la première surface et/ou la deuxième surface du premier carton comprend une couche de revêtement comprenant des particules de charge inorganiques, de préférence choisies parmi le carbonate de calcium, le kaolin et le dioxyde de titane.

14. Procédé selon la revendication 13, dans lequel la couche de revêtement de la première surface du premier carton comprend en outre un liant choisi parmi un latex de polymère, un alcool polyvinylique, une protéine, et l'amidon.

15. Procédé selon l'une quelconque des revendications 1 à 14, dans lequel le PCC a un diamètre moyen compris dans une plage allant de 30 à 60 nm.

16. Produit en carton scellé comprenant un joint d'étanchéité pouvant être obtenu par un procédé selon l'une quelconque des revendications 1 à 15.

17. Produit en carton pouvant être obtenu par un procédé selon l'une quelconque des revendications 1 à 15.
